# EUROPEAN PATENT APPLICATION

(11) **EP 4 811 725 A1**
(43) Date of publication of application: **23.09.2026**
(21) Application number: 25741532.3
(22) Date of filing: 15.01.2025
(51) Int. Cl.: H04L 9/40

(54) **DATA ENCRYPTION METHOD AND APPARATUS, DATA DECRYPTION METHOD AND APPARATUS, AND STORAGE MEDIUM**

(30) Priority: 17.01.2024 CN 202410073081
(71) Applicant: Chongqing Changan Technology Co., Ltd., Chongqing 401135 (CN)
(72) Inventor: HUANG, Weijun, Chongqing 401135 (CN)
(74) Representative: Herrero & Asociados, S.L.
(86) International application number: PCT/CN2025/072526
(87) International publication number: WO 2025/152971

(57) **Abstract**

The present application relates to a data encryption method and apparatus, a data decryption method and apparatus, and a storage medium. The data encryption method comprises: acquiring data to be transmitted of a data sending end, wherein the data sending end corresponds to a target platform; determining check data on the basis of the data to be transmitted and the target platform; determining a target encryption mode from a preset codebook on the basis of the data to be transmitted and the target platform; and on the basis of the target encryption mode and the check data, packing the data to be transmitted, so as to obtain target transmission data. In the present application, the check data can be determined on the basis of the data to be transmitted and the target platform corresponding to the data sending end, and the target encryption mode can be determined from the preset codebook on the basis of the data to be transmitted and the target platform, so that the encryption mode in an encryption process has certain randomness, the security of the target transmission data in a transmission process is improved, the data security is ensured, and the data reliability is improved by means of the check data.

## Description

### CROSS-REFERENCE TO RELATED APPLICATIONS

The present application claims priority to Chinese Patent Application No. 202410073081.1, filed on January 17, 2024, which is herein incorporated by reference in its entirety.

### TECHNICAL FIELD

The present disclosure relates to the technical field of data transmission, and in particular to a data encryption method, a data decryption method, a data encryption device, a data decryption device, an electronic device, and a storage medium.

### BACKGROUND

A SOME/IP protocol (scalable service-oriented middleware over IP protocol) involves an automotive middleware solution that is suitable for different sizes and different platforms (i.e., different operating systems), ensuring that vehicles may support an information and entertainment field as well as other fields of the vehicle. It may be used in a media oriented systems transport (MOST) replacement scenario or in a more traditional controller area network (CAN) scenario. It is currently the most core communication protocol for implementing service-oriented architecture (SOA) architecture in the automotive industry. However, it does not take into account security, reliability, and efficiency during data transmission, which affects data transmission security.

### SUMMARY OF THE DISCLOSURE

In order to solve or at least partially solve the above technical problems, the present disclosure provides a data encryption method, a data decryption method, a data encryption device, a data decryption device, an electronic device, and a storage medium.

In a first aspect, the present disclosure provides a data encryption method, including:
obtaining to-be-transmitted data of a data sending terminal, wherein the data sending terminal corresponds to a target platform;
determining check data based on the to-be-transmitted data and the target platform;
determining a target encryption mode from a preset codebook based on the to-be-transmitted data and the target platform; and
packaging the to-be-transmitted data based on the target encryption mode and the check data to obtain target transmission data.

In some embodiments, the determining the check data based on the to-be-transmitted data and the target platform, includes: obtaining a target time for receiving the to-be-transmitted data; determining the check data based on the to-be-transmitted data, the target time, and the target platform; and determining a splicing position of the check data based on the target time. Correspondingly, the packaging the to-be-transmitted data based on the target encryption mode and the check data to obtain the target transmission data, includes: packaging the to-be-transmitted data based on the target encryption mode, the check data, and the splicing position to obtain the target transmission data.

In some embodiments, the determining the target encryption mode from the preset codebook based on the to-be-transmitted data and the target platform, includes:
obtaining indication information carried by the to-be-transmitted data, wherein the indication information is configured to indicate an encryption mode and/or an encryption level; and
determining the target encryption mode for the to-be-transmitted data from the preset codebook based on the target platform, the encryption mode, and/or the encryption level.

In some embodiments, when the to-be-transmitted data does not carry the indication information, the determining the target encryption mode from the preset codebook based on the to-be-transmitted data and the target platform, includes:
determining at least two encryption modes from the preset codebook based on the target time of the to-be-transmitted data and the target platform, and randomly determining one target encryption mode from the at least two encryption modes; or
determining all encryption modes with processing speeds greater than a target processing threshold from the preset codebook based on the to-be-transmitted data and the target platform, and randomly determining one target encryption mode from all the encryption modes.

In some embodiments, the splicing position includes a data head or a data tail.

In some embodiments, the data encryption method further includes:
obtaining a target encryption and decryption algorithm that is to be added; and
updating the codebook based on the target encryption and decryption algorithm.

In a second aspect, the present disclosure provides a data decryption method, including:
obtaining received target transmission data by a data receiving terminal; wherein the target transmission data carries check data;
checking the check data; and
decrypting the target transmission data based on a preset codebook in a case where the check data passes check, to obtain decrypted data; wherein the preset codebook is the same as a codebook used by a data sending terminal for encryption.

In a third aspect, the present disclosure provides a data encryption device, including:
a first acquisition module, configured to obtain to-be-transmitted data of a data sending terminal; wherein the data sending terminal corresponds to a target platform;
a first determination module, configured to determine check data based on the to-be-transmitted data and the target platform;
a second determination module, configured to determine a target encryption mode from a preset codebook based on the to-be-transmitted data and the target platform; and
an encryption module, configured to package the to-be-transmitted data based on the target encryption mode and the check data, to obtain target transmission data.

In a fourth aspect, the present disclosure provides a data decryption device, including:
a second acquisition module, configured to enable a data receiving terminal to obtain received target transmission data; wherein the target transmission data carries check data;
a check module, configured to check the check data; and
a decryption module, configured to decrypt the target transmission data based on a preset codebook in a case where the check data passes check, to obtain decrypted data; wherein the preset codebook is the same as a codebook used by a data sending terminal for encryption.

In a fifth aspect, the present disclosure provides an electronic device, including a processor, a communication interface, a memory configured to store a computer program, and a communication bus. The processor, the communication interface, and the memory are configured to communicate with one another through the communication bus. The processor is configured to implement the data encryption method in any one of the embodiments in the first aspect or the data decryption method in the second aspect when executing the computer program stored in the memory.

In a sixth aspect, the present disclosure provides a computer-readable storage medium storing the computer program. When the computer program is executed by the processor, the data encryption method in any one of the embodiments in the first aspect or the data decryption method in the second aspect is implemented.

Effects of the present disclosure are as follows.

In the data encryption method, the to-be-transmitted data of the data sending terminal is obtained, and the data sending terminal corresponds to the target platform. The check data is determined based on the to-be-transmitted data and the target platform. The target encryption mode is determined from the preset codebook based on the to-be-transmitted data and the target platform. The to-be-transmitted data is packaged based on the target encryption mode and the check data, to obtain the target transmission data. In the data encryption method, the check data may be determined based on the to-be-transmitted data and the target platform corresponding to the data sending terminal, and the target encryption mode may be determined from the preset codebook based on the to-be-transmitted data and the target platform. Therefore, the encryption mode during the encryption process has a certain degree of randomness, security of the target transmission data during transmission is improved, thereby ensuring data security and improving data reliability through the check data.

### BRIEF DESCRIPTION OF THE DRAWINGS

Accompanying drawings are incorporated into specification and form a part of the specification, illustrating embodiments in accordance with the present disclosure. The accompanying drawings are used together with the specification to explain principle of the present disclosure.

In order to more clearly illustrate technical solutions in some embodiments of the present disclosure or in the related art, hereinafter, the accompanying drawings that are used in the description of some embodiments or the related art are briefly described. Obviously, for those of ordinary skill in the art, other accompanying drawings may be obtained based on these accompanying drawings without any creative efforts.
FIG. 1 is a system architecture diagram of a data encryption method in an embodiment of the present disclosure.
FIG. 2 is a schematic flowchart of a data encryption method in an embodiment of the present disclosure.
FIG. 3 is a flowchart illustrating data encryption in an embodiment of the present disclosure.
FIG. 4 is a schematic flowchart of a data decryption method in an embodiment of the present disclosure.
FIG. 5 is a flowchart illustrating data decryption in an embodiment of the present disclosure.
FIG. 6 is a structural schematic diagram of a data encryption device in an embodiment of the present disclosure.
FIG. 7 is a structural schematic diagram of a data decryption device in an embodiment of the present disclosure.
FIG. 8 is a structural schematic diagram of an electronic device in an embodiment of the present disclosure.

### DETAILED DESCRIPTION

Implementation methods of the present disclosure may be described below with reference to the accompanying drawings and preferred embodiments, and those skilled in the art may easily understand other advantages and effects of the present disclosure from contents disclosed in the present specification. The present disclosure may also be implemented or applied through other different specific implementation methods, and various details in the present specification may also be modified or changed based on different viewpoints and applications without departing from spirit of the present disclosure. It should be understood that the preferred embodiments are only for illustrating the present disclosure, rather than limiting the protection scope of the present disclosure.

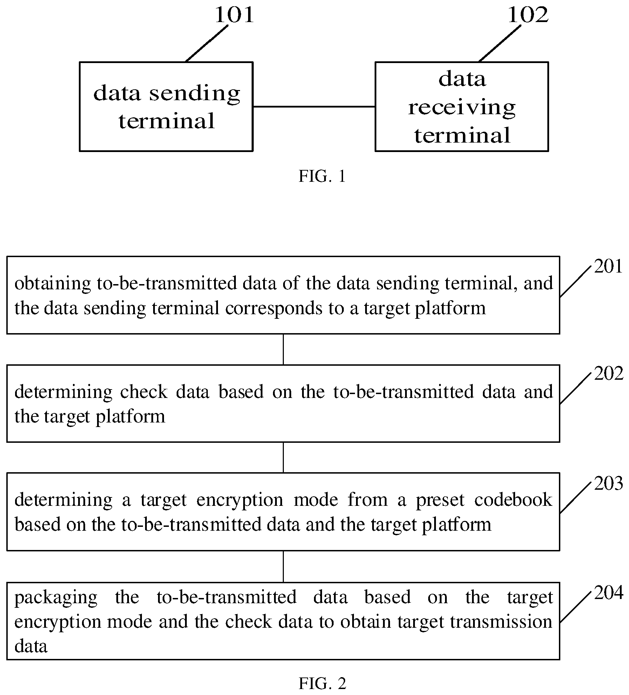

A first embodiment of the present disclosure provides a data encryption method, and the data encryption method may be applied to system architecture shown in FIG. 1. The system architecture includes at least a data sending terminal 101 and a data receiving terminal 102, and the data sending terminal 101 and the data receiving terminal 102 establish a communication connection. The data sending terminal 101 and the data receiving terminal 102 may be configured to transmit data through a SOME/IP protocol.

The data encryption method may be applied to the data sending terminal 101 or the data receiving terminal 102 of the system architecture. Next, based on the system architecture, the data encryption method and a data decryption method during the data transmission are explained in detail.

The data encryption method, as shown in FIG. 2, includes operations at blocks 201 to 204.

At block 201, the data encryption method may include obtaining to-be-transmitted data of the data sending terminal, and the data sending terminal corresponds to a target platform.

The target platform refers to an operating system platform of the data sending terminal, such as Linux, Windows, Android, or other platforms.

At block 202, the data encryption method may include determining check data based on the to-be-transmitted data and the target platform.

The check data may be determined based on the to-be-transmitted data and the target platform. Of course, other information may also be referred to, such as a data length of the to-be-transmitted data, an encryption method (or an encryption level) specified by a user, or a target time at which the to-be-transmitted data is received, which is not limited in the present disclosure. The check data may serve as a splicing position for finally generated target transmission data, such as a data header or a data tail of an encrypted data protocol.

In an embodiment, determining the check data based on the to-be-transmitted data and the target platform, includes: obtaining the target time at which the to-be-transmitted data is received; determining the check data based on the to-be-transmitted data, the target time, and the target platform; and determining the splicing position of the check data based on the target time, wherein the splicing position may be the data header or the data tail.

In this embodiment, the check data is determined based on the target time, the to-be-transmitted data, and the target platform. This can make the check data more random and less likely to be cracked, thereby improving the security during the data transmission. Moreover, the splicing position of the check data is also determined based on the target time, which further improves the reliability of the check data.

At block 203, the data encryption method may include determining a target encryption mode from a preset codebook based on the to-be-transmitted data and the target platform.

The preset codebook may include multiple different encryption modes, and different target platforms may correspond to multiple encryption modes. The target encryption mode may be determined from multiple different encryption modes based on the target platform and the to-be-transmitted data, improving randomness of encryption and thus improving the security of the data transmission.

In an embodiment, determining the target encryption mode from the preset codebook based on the to-be-transmitted data and the target platform, includes: obtaining indication information carried by the to-be-transmitted data, wherein the indication information may be the encryption mode selected by the user, the selected encryption level, or of course, both the encryption mode and the encryption level, which is not limited in the present disclosure. Based on the target platform, the encryption mode, and the encryption level, the target encryption mode of the to-be-transmitted data is determined from the preset codebook.

In this embodiment, the encryption modes in the codebook may include a symmetric encryption algorithm and an asymmetric encryption algorithm, such as a digest algorithm and a signature algorithm, etc. The encryption modes may include a triple data encryption algorithm (TDEA, Triple DEA, or 3DES), a block algorithm using key encryption (data encryption standard, DES), an asymmetric encryption algorithm RSA, an IDEA encryption algorithm, etc. Based on the user's needs, a corresponding encryption mode may be selected to encrypt the data, and then the encrypted data may be packaged together with basic check data and sent out.

In an embodiment, when the to-be-transmitted data does not carry the indication information, determining the target encryption mode from the preset codebook based on the to-be-transmitted data and the target platform, may include at least the following two modes.

A first mode is determining at least two encryption modes from the preset codebook based on the target time of the to-be-transmitted data and the target platform, and randomly determining one target encryption mode from the at least two encryption modes.

The multiple encryption modes may be determined from the preset codebook based on the target time and target platform, and then one target encryption mode may be randomly selected from the multiple encryption modes.

A second mode is determining all encryption modes with processing speeds greater than a target processing threshold from the preset codebook based on the to-be-transmitted data and the target platform, and randomly determining one target encryption mode from all the encryption modes.

Different platforms have different data processing capabilities. Based on a type of the target platform, one target encryption mode may be randomly selected from all the encryption modes, and all these encryption modes may be determined from the preset codebook and have the processing speeds greater than the target processing threshold corresponding to the target platform.

In this embodiment, any one of the above modes may achieve randomization of the encryption mode. On the premise that the user does not specify a specific encryption mode, the encryption mode may be randomly selected to encrypt the data, thereby improving the security of the data transmission.

At block 204, the data encryption method may include packaging the to-be-transmitted data based on the target encryption mode and the check data to obtain target transmission data.

On the premise that the check data includes different splicing positions, packaging the to-be-transmitted data based on the target encryption mode and the check data to obtain the target transmission data, includes: packaging the to-be-transmitted data based on the target encryption mode, the check data, and the splicing position to obtain the target transmission data.

In the data encryption method, the check data may be determined based on the to-be-transmitted data and the target platform corresponding to the data sending terminal, and the target encryption mode may be determined from the preset codebook based on the to-be-transmitted data and the target platform. Therefore, the encryption mode during the encryption process has a certain degree of randomness, the security of the target transmission data during transmission is improved, thereby ensuring data security and improving data reliability through the check data.

In an embodiment, the data encryption method further includes: obtaining a target encryption and decryption algorithm that is to be added; and updating the codebook based on the target encryption and decryption algorithm.

In this embodiment, the codebook may be iteratively updated based on the target encryption and decryption algorithm that is to be added, thereby improving sustainability and effectiveness of encryption and decryption.

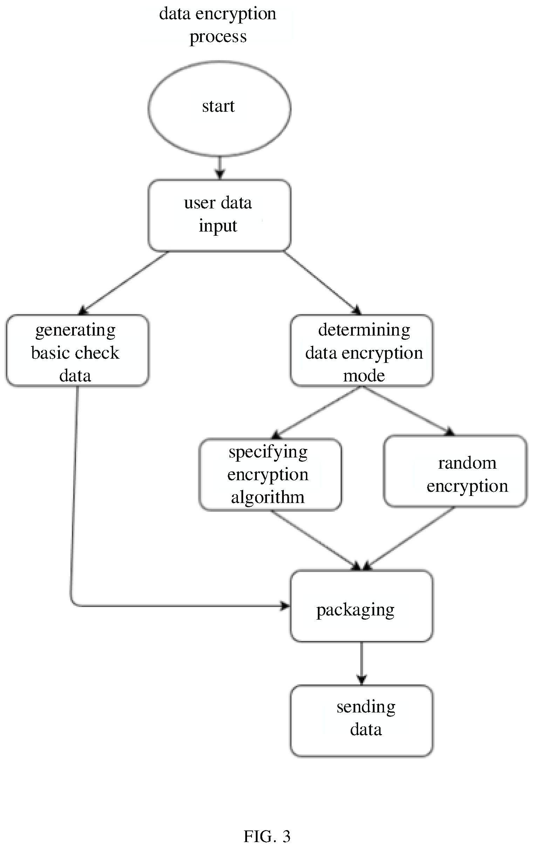

In an embodiment, a data encryption process is shown in FIG. 3.

In this embodiment, basic check data is firstly generated based on the data input by the user.

Parameters of the data sending terminal configured by the user are obtained. The parameters include a selected platform, the encryption mode (or the encryption level), the data length, etc. A corresponding encrypted data protocol header or a corresponding encrypted data protocol tail is generated based on the configured parameters. A decrypting party may check or verify the protocol header or the protocol tail in the received data to determine validity of the data, and then performs a decryption operation.

The selected platform may be Linux, Windows, Android, etc. The encryption method may be DES, RSA, 3DES, FEAL, IDEA, etc. Of course, the user may not specify the specific encryption algorithm and only needs to provide one encryption level. The data length is a length of the data actually to be transmitted by the user.

Secondly, a basic data splicing mode may be randomly determined. For example, the splicing position (the data header or the data tail) of the above-generated basic check data is calculated through a certain algorithm using current time as a parameter.

Thirdly, the codebook contains common symmetric encryption algorithm and asymmetric encryption algorithm; commonly used summarization algorithm and signature algorithm 3DES, DES, RSA, IDEA, etc. Based on the user's needs, the corresponding encryption mode may be selected to encrypt the data, and then the encrypted data is packaged together with the basic check data and sent out.

In the design of the codebook, different encryption modes have different processing speeds, different security levels, and different correctness. Therefore, the encryption algorithms are classified and graded, so that the encryption algorithms are applicable to and correspond to different platforms, and then the encryption algorithms are stored in predefined data (not limited to a structure array, which may be a file or a database, etc.). The data at least includes key information, such as an applicable platform, a level, a service, the encryption and decryption mode, etc.

In this embodiment, the user may specify a specific encryption and decryption mode during the data transmission. However, sometimes the user himself is not sure about the encryption mode he wants. In this case, on the premise that the user does not specify the specific encryption mode, the encryption mode may be randomly selected to encrypt the data, thus achieving randomness of encryption and decryption. Random modes may be divided into two types: randomly selecting one from the selected platform through time, or selecting a faster data processing mode on the premise of compatibility, security, and reliability. Moreover, the codebook may be iteratively updated, the to-be-added encryption and decryption algorithm is copied to a specified file, and then the predefined data is synchronously updated.

In this embodiment, a universal data security encryption and decryption framework is designed to adapt to different application environments (i.e., different platforms). Developers only need to configure reasonable parameters based on their own environment, and then the data security encryption and decryption framework may be used. This greatly reduces the amount of code modification for the developers and later maintenance costs. Furthermore, this encryption and decryption solution also supports technology updates for later encryption and decryption, and this encryption and decryption solution may be synchronously updated, thereby increasing its flexibility and timeliness, thus achieving adaptation to different needs of various platform environments.

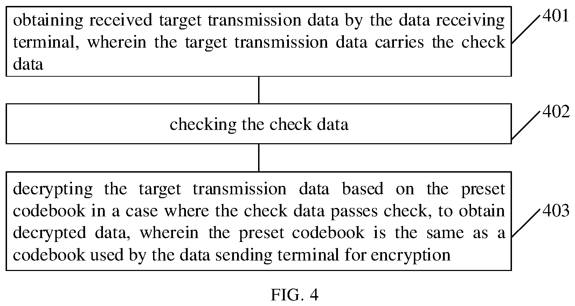

A data decryption method, as shown in FIG. 4, includes operations at blocks 401 to 403.

At block 401, the data decryption method may include obtaining received target transmission data by the data receiving terminal, wherein the target transmission data carries the check data.

At block 402, the data decryption method may include checking the check data.

At block 403, the data decryption method may include decrypting the target transmission data based on the preset codebook in a case where the check data passes check, to obtain decrypted data, wherein the preset codebook is the same as a codebook used by the data sending terminal for encryption.

In the data decryption method, the target transmission data is data encrypted by the data sending terminal using the data encryption method. The target transmission data carries the check data. At the data receiving terminal, the check data is first checked. When the check fails, the target transmission data does not need to be decrypted, and a data parsing error may be directly returned. After the check succeeds, the data may be decrypted by querying the codebook that is the same as the codebook used by the data sending terminal for encryption, thereby obtaining the decrypted data. The security of the data transmission is improved by verifying the check data and decrypting through the codebook.

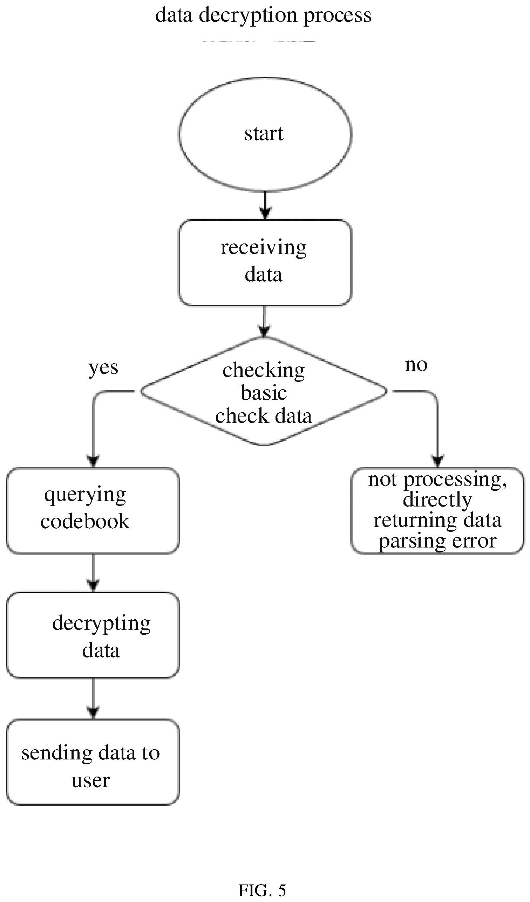

In an embodiment, a data decryption process is shown in FIG. 5. In this embodiment, for the received data, the basic check data is first checked. When the check fails, the target transmission data does not to be decrypted, and the data parsing error may be directly returned. After the check succeeds, the data may be decrypted by querying the codebook that is the same as the codebook used by the data sending terminal for encryption, thereby obtaining the decrypted data. The decrypted data may be sent to the user. The security of the data transmission is improved by verifying the check data and decrypting through the codebook.

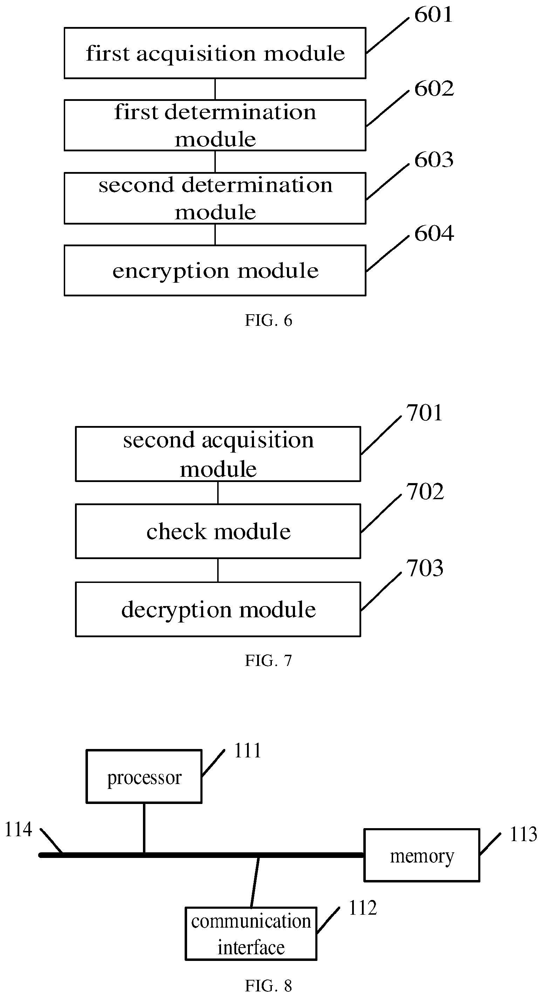

Based on the same technical concept, a second embodiment of the present disclosure provides a data encryption device, as shown in FIG. 6. The data encryption device includes a first acquisition module 601, a first determination module 602, a second determination module 603, an encryption module 604.

The first acquisition module 601 is configured to obtain the to-be-transmitted data of the data sending terminal, and the data sending terminal corresponds to the target platform.

The first determination module 602 is configured to determine the check data based on the to-be-transmitted data and the target platform.

The second determination module 603 is configured to determine the target encryption mode from the preset codebook based on the to-be-transmitted data and the target platform.

The encryption module 604 is configured to package the to-be-transmitted data based on the target encryption mode and the check data, to obtain the target transmission data.

In the data encryption device, the check data may be determined based on the to-be-transmitted data and the target platform corresponding to the data sending terminal, and the target encryption mode may be determined from the preset codebook based on the to-be-transmitted data and the target platform. Therefore, the encryption mode during the encryption process has a certain degree of randomness, the security of the target transmission data during transmission is improved, thereby ensuring data security and improving data reliability through the check data.

A data decryption device, as shown in FIG. 7, includes a second acquisition module 701, a check module 702, and a decryption module 703.

The second acquisition module 701 is configured to enable the data receiving terminal to obtain the received target transmission data, and the target transmission data carries the check data.

The check module 702 is configured to check the check data.

The decryption module 703 is configured to decrypt the target transmission data based on the preset codebook in a case where the check data passes the check, to obtain the decrypted data. The preset codebook is the same as the codebook used by the data sending terminal for encryption.

In the data decryption device, the target transmission data is the data encrypted by the data sending terminal using the data encryption method. The target transmission data carries the check data. At the data receiving terminal, the check data is first checked. When the check fails, the target transmission data does not need to be decrypted, and the data parsing error may be directly returned. After the check succeeds, the data may be decrypted by querying the codebook that is the same as the codebook used by the data sending terminal for encryption, thereby obtaining the decrypted data. The security of the data transmission is improved by verifying the check data and decrypting through the codebook.

As shown in FIG. 8, a third embodiment of the present disclosure provides an electronic device including a processor 111, a communication interface 112, a memory 113, and a communication bus 114. The processor 111, the communication interface 112, and the memory 113 communicate with one another through the communication bus 114.

The memory 113 is configured to store a computer program.

In an embodiment, the processor 111 is configured to implement the data encryption method or the data decryption method in any one of the aforementioned method embodiments when executing the program stored in the memory 113.

In the above electronic device, the memory and processor communicate through the communication bus and the communication interface. The communication bus may be a peripheral component interconnect (PCI) bus or an extended industry standard architecture (EISA) bus, etc. The communication bus may be divided into an address bus, a data bus, a control bus, etc.

The memory may include a random access memory (RAM) or a non-volatile memory, such as at least one disk storage device. In some embodiments, the memory may also be at least one storage device located remotely from the above processor.

The above processor may be a general-purpose processor, including a central processing unit (CPU), a network processor (NP), etc. The processor may also be a digital signal processor (DSP), an application specific integrated circuit (ASIC), a field-programmable gate array (FPGA), or other programmable logic devices, discrete gates or transistor logic devices, or discrete hardware components.

A fourth embodiment of the present disclosure provides a computer-readable medium having a non-volatile program code executable by the processor.

In an embodiment of the present disclosure, the computer-readable medium is configured to store a program code for the processor to execute any one of the above methods.

Alternatively, specific examples in this embodiment may refer to the examples described in the above embodiments, which is not repeated here.

When implemented in practice, the embodiments of the present disclosure may refer to the various embodiments described above, with corresponding technical effects.

It can be understood that the embodiments described in the present disclosure may be implemented using hardware, software, firmware, middleware, microcode, or any combination thereof. For hardware implementation, a processing unit may be implemented in one or more of following or combination thereof: an application specific integrated circuit (ASIC), a digital signal processor (DSP), a digital signal processing device (DSPD), a programmable logic device (PLD), a field-programmable gate array (FPGA), a general-purpose processor, a controller, a microcontroller, a microprocessor, other electronic units configured to perform the functions described in the present disclosure.

For software implementation, the techniques described in the present disclosure may be achieved by a unit that executes the functions described in the present disclosure. The software code may be stored in the memory and executed by the processor. The memory may be implemented within the processor or external to the processor.

Those of ordinary skill in the art may be aware that, in combination with the examples described in the embodiments disclosed in the present disclosure, units and algorithm operations may be implemented by electronic hardware or a combination of computer software and the electronic hardware. Whether the functions are performed by hardware or software depends on particular applications and design constraint conditions of the technical solutions. Those of ordinary skill in the art may use different methods to implement the described functions for each particular application, but it should not be considered that the implementation goes beyond the scope of the present disclosure.

It may be clearly understood by those of ordinary skill in the art that, for the purpose of convenient and brief description, a detailed operating process of the foregoing system, device, and unit, may refer to a corresponding process in the foregoing method embodiments. Details are not described herein again.

In the embodiments of the present disclosure, it should be understood that the disclosed devices and method may be implemented in other manners. For example, the described device embodiments are merely illustrative. For example, the division of the modules is merely logical function division. There may be another division manner during actual implementation. For example, multiple modules or components may be combined or integrated into another system, or some features may be ignored or not performed. In addition, the displayed or discussed mutual couplings or direct couplings or communication connections may be implemented by using some interfaces. Indirect couplings or communication connections between the devices or the units may be implemented in electronic, mechanical, or other forms.

The units described as separate parts may or may not be physically separate. The parts displayed as units may or may not be physical units, may be located in one position, or may be distributed on multiple network units. Some or all of the units may be selected based on actual requirements to achieve the objectives of the solutions of embodiments.

In addition, functional units in the embodiments of the present disclosure may be integrated into one processing unit, each of the units may exist alone physically, or two or more units may be integrated into one unit.

When the functions are implemented in a form of a software functional unit and sold or used as an independent product, the functions may be stored in the computer-readable storage medium. Based on such an understanding, the technical solutions in the embodiments of the present disclosure essentially, or the part contributing to the conventional technology, or a part of the technical solutions may be implemented in a form of a software product. The computer software product is stored in the storage medium, and includes several instructions for instructing a computer device (which may be a personal computer, a server, or a network device) to perform all or a part of the operations of the methods described in the embodiments of the present disclosure. The foregoing storage medium includes any medium that may store program code, such as a USB flash drive, a removable hard disk, a ROM, a RAM, a magnetic disk, or an optical disc.

It should be noted that in the present disclosure, relational terms such as "first" and "second" are used solely to distinguish one entity or operation from another entity or operation, and do not necessarily require or imply that any such actual relationship or order exists between these entities or operations. Furthermore, the terms "comprising" "including" or any other variation thereof are intended to cover non-exclusive inclusion, such that a process, a method, a article, or an apparatus that includes a series of elements is not limited to those elements only, but may include other elements not expressly listed, or elements inherent to such process, method, article, or apparatus. Without further limitation, an element defined by the statement "comprising a ..." or "including a ..." does not exclude the existence of additional identical elements in the process, the method, the article, or the apparatus that includes the element.

The above embodiments are merely preferred embodiments provided to fully illustrate the present disclosure, and the protection scope of the present disclosure is not limited thereto. Any equivalent substitution or modification made by those skilled in the art based on the present disclosure shall fall within the protection scope of the present disclosure.

## Claims

1. A data encryption method, **characterized by** comprising:
obtaining to-be-transmitted data of a data sending terminal, wherein the data sending terminal corresponds to a target platform;
determining check data based on the to-be-transmitted data and the target platform;
determining a target encryption mode from a preset codebook based on the to-be-transmitted data and the target platform; and
packaging the to-be-transmitted data based on the target encryption mode and the check data to obtain target transmission data.

2. The method according to claim 1, wherein
the determining the check data based on the to-be-transmitted data and the target platform, comprises:
obtaining a target time for receiving the to-be-transmitted data;
determining the check data based on the to-be-transmitted data, the target time, and the target platform; and
determining a splicing position of the check data based on the target time;
correspondingly, the packaging the to-be-transmitted data based on the target encryption mode and the check data to obtain the target transmission data, comprises:
packaging the to-be-transmitted data based on the target encryption mode, the check data, and the splicing position to obtain the target transmission data.

3. The method according to claim 1, wherein the determining the target encryption mode from the preset codebook based on the to-be-transmitted data and the target platform, comprises:
obtaining indication information carried by the to-be-transmitted data, wherein the indication information is configured to indicate an encryption mode and/or an encryption level; and
determining the target encryption mode for the to-be-transmitted data from the preset codebook based on the target platform, the encryption mode, and/or the encryption level.

4. The method according to claim 3, wherein when the to-be-transmitted data does not carry the indication information, the determining the target encryption mode from the preset codebook based on the to-be-transmitted data and the target platform, comprises:
determining at least two encryption modes from the preset codebook based on the target time of the to-be-transmitted data and the target platform, and randomly determining one target encryption mode from the at least two encryption modes; or
determining all encryption modes with processing speeds greater than a target processing threshold from the preset codebook based on the to-be-transmitted data and the target platform, and randomly determining one target encryption mode from all the encryption modes.

5. The method according to claim 2, wherein the splicing position comprises a data head or a data tail.

6. The method according to claim 1, wherein the method further comprises:
obtaining a target encryption and decryption algorithm that is to be added; and
updating the codebook based on the target encryption and decryption algorithm.

7. A data decryption method, **characterized by** comprising:
obtaining received target transmission data by a data receiving terminal; wherein the target transmission data carries check data;
checking the check data; and
decrypting the target transmission data based on a preset codebook in a case where the check data passes check, to obtain decrypted data; wherein the preset codebook is the same as a codebook used by a data sending terminal for encryption.

8. A data encryption device, **characterized by** comprising:
a first acquisition module, configured to obtain to-be-transmitted data of a data sending terminal; wherein the data sending terminal corresponds to a target platform;
a first determination module, configured to determine check data based on the to-be-transmitted data and the target platform;
a second determination module, configured to determine a target encryption mode from a preset codebook based on the to-be-transmitted data and the target platform; and
an encryption module, configured to package the to-be-transmitted data based on the target encryption mode and the check data, to obtain target transmission data.

9. A data decryption device, **characterized by** comprising:
a second acquisition module, configured to enable a data receiving terminal to obtain received target transmission data; wherein the target transmission data carries check data;
a check module, configured to check the check data; and
a decryption module, configured to decrypt the target transmission data based on a preset codebook in a case where the check data passes check, to obtain decrypted data; wherein the preset codebook is the same as a codebook used by a data sending terminal for encryption.

10. An electronic device, **characterized by** comprising:
a processor;
a communication interface;
a memory, configured to store a computer program; and
a communication bus;
wherein the processor, the communication interface, and the memory are configured to communicate with one another through the communication bus; and the processor is configured to implement the data encryption method according to any one of claims 1 to 6 or the data decryption method according to claim 7 when executing the computer program stored in the memory.

11. A computer-readable storage medium, **characterized in that** the computer-readable storage medium stores a computer program; and
when the computer program is executed by a processor, the data encryption method according to any one of claims 1 to 6 or the data decryption method according to claim 7 is implemented.
